# EUROPÄISCHE PATENTSCHRIFT

(11) **EP 2 681 023 B1**
(45) Veröffentlichungstag und Bekanntmachung des Hinweises auf die Patenterteilung: **20.10.2021**
(21) Anmeldenummer: 12716219.6
(22) Anmeldetag: 02.03.2012
(51) Int. Cl.: B27B 33/14

(54) **WERKZEUGMASCHINENTRENNVORRICHTUNG**
MACHINE TOOL SEPARATING DEVICE
DISPOSITIF DE SÉPARATION POUR MACHINE-OUTIL

(30) Priorität: 03.03.2011 DE 102011005008
(43) Veröffentlichungstag der Anmeldung: 08.01.2014
(73) Patentinhaber: Robert Bosch GmbH, 70442 Stuttgart (DE)
(72) Erfinder: FUCHS, Rudolf, 73765 Neuhausen (DE)
(86) Internationale Anmeldenummer: PCT/EP2012/000951
(87) Internationale Veröffentlichungsnummer: WO 2012/116839

(56) Entgegenhaltungen:
- CH-A- 221 661
- DE-A1- 2 758 380
- JP-A- 7 214 505
- US-A- 3 910 147
- US-A- 4 382 334
- US-A- 4 464 964
- US-A- 4 807 366

## Beschreibung

Die Erfindung betrifft eine Handwerkzeugmaschinentrennvorrichtung gemäß dem Oberbegriff des Anspruchs 1.

### Stand der Technik

Eine solche Vorrichtung ist aus US3910147A bekannt.

Es sind bereits Werkzeugmaschinentrennvorrichtungen bekannt, die einen Schneidstrang und eine Führungseinheit aufweisen.

### Offenbarung der Erfindung

Gemäß der Erfindung wird eine Vorrichtung bereitgestellt, die durch die Merkmale des Anspruchs 1 definiert ist. Die Erfindung geht aus von einer Werkzeugmaschinentrennvorrichtung, insbesondere von einer Handwerkzeugmaschinentrennvorrichtung, mit zumindest einem Schneidstrang und mit zumindest einer Führungseinheit.

Es wird vorgeschlagen, dass der Schneidstrang, entlang einer zumindest im Wesentlichen senkrecht zu einer Schneidebene des Schneidstrangs verlaufenden Richtung betrachtet, eine maximale Abmessung kleiner als 4 mm aufweist. Vorzugsweise ist die Abmessung als Breite des Schneidstrangs ausgebildet. Besonders bevorzugt weist der Schneidstrang, entlang der zumindest im Wesentlichen senkrecht zur Schneidebene des Schneidstrangs verlaufenden Richtung betrachtet, entlang einer Gesamtlänge des Schneidstrangs eine zumindest im Wesentlichen gleichbleibende maximale Abmessung auf. Die maximale Abmessung entspricht entlang der Gesamtlänge des Schneidstrangs bevorzugt einem Wert aus einem Wertebereich von 1 mm bis 3 mm. Infolgedessen weist die Werkzeugmaschinentrennvorrichtung, entlang einer Gesamterstreckung der Werkzeugmaschinentrennvorrichtung betrachtet, eine Gesamtbreite auf, die kleiner ist als 4 mm. Somit ist der Schneidstrang vorzugsweise dazu vorgesehen, einen Schneidspalt zu erzeugen, der, entlang der zumindest im Wesentlichen senkrecht zur Schneidebene des Schneidstrangs verlaufenden Richtung betrachtet, eine maximale Abmessung kleiner als 4 mm aufweist. Unter einem "Schneidstrang" soll hier insbesondere eine Einheit verstanden werden, die dazu vorgesehen ist, einen atomaren Zusammenhalt eines zu bearbeitenden Werkstücks örtlich aufzuheben, insbesondere mittels eines mechanischen Abtrennens und/oder mittels eines mechanischen Abtragens von Werkstoffteilchen des Werkstücks. Bevorzugt ist der Schneidstrang dazu vorgesehen, das Werkstück in zumindest zwei physikalisch voneinander getrennte Teile zu separieren und/oder zumindest teilweise Werkstoffteilchen des Werkstücks ausgehend von einer Oberfläche des Werkstücks abzutrennen und/oder abzutragen. Der Schneidstrang ist besonders bevorzugt als endloser Schneidstrang, insbesondere als Schneidkette, ausgebildet, der entlang eines Umfangs der Führungseinheit umlaufend und/oder oszillierend antreibbar ist.

Unter einer "Führungseinheit" soll hier insbesondere eine Einheit verstanden werden, die dazu vorgesehen ist, eine Zwangskraft zumindest entlang einer Richtung senkrecht zu einer Schneidrichtung des Schneidstrangs auf den Schneidstrang auszuüben, um eine Bewegungsmöglichkeit des Schneidstrangs entlang der Schneidrichtung vorzugeben. In diesem Zusammenhang soll unter "vorgesehen" insbesondere speziell ausgelegt und/oder speziell ausgestattet verstanden werden. Bevorzugt weist die Führungseinheit zumindest ein Führungselement auf, insbesondere eine Führungsnut, durch das der Schneidstrang geführt wird. Bevorzugt ist der Schneidstrang, in einer Schneidebene betrachtet, entlang eines gesamten Umfangs der Führungseinheit durch die Führungseinheit mittels des Führungselements, insbesondere der Führungsnut, geführt. Besonders bevorzugt bilden der Schneidstrang und die Führungseinheit ein geschlossenes System. Bevorzugt weist die Führungseinheit eine geometrische Gestalt auf, die, in der Schneidebene betrachtet, eine in sich geschlossene Außenkontur aufweist, die zumindest zwei zueinander parallel verlaufende Geraden und zumindest zwei jeweils sich zugewandte Enden der Geraden miteinander verbindende Verbindungsabschnitte, insbesondere Kreisbögen, umfasst. Der Begriff "geschlossenes System" soll hier insbesondere ein System definieren, das zumindest zwei Komponenten umfasst, die mittels eines Zusammenwirkens in einem demontierten Zustand des Systems von einem dem System übergeordneten System, wie beispielsweise einer Werkzeugmaschine, eine Funktionalität beibehalten und/oder die im demontierten Zustand unverlierbar miteinander verbunden sind. Bevorzugt sind die zumindest zwei Komponenten des geschlossenen Systems für einen Bediener zumindest im Wesentlichen unlösbar miteinander verbunden. Unter "zumindest im Wesentlichen unlösbar" soll hier insbesondere eine Verbindung von zumindest zwei Bauteilen verstanden werden, die lediglich unter der Zuhilfenahme von Trennwerkzeugen, wie beispielsweise einer Säge, insbesondere einer mechanischen Säge usw., und/oder chemischen Trennmitteln, wie beispielsweise Lösungsmittel usw., voneinander trennbar sind.

Der Begriff "Schneidebene" soll hier insbesondere eine Ebene definieren, in der der Schneidstrang in zumindest einem Betriebszustand entlang eines Umfangs der Führungseinheit in zumindest zwei zueinander entgegengesetzt gerichtete Schneidrichtungen relativ zur Führungseinheit bewegt wird. Bevorzugt ist die Schneidebene bei einer Bearbeitung eines Werkstücks zumindest im Wesentlichen quer zu einer bearbeitenden Werkstückoberfläche ausgerichtet. Unter "zumindest im Wesentlichen quer" soll hier insbesondere eine Ausrichtung einer Ebene und/oder einer Richtung relativ zu einer weiteren Ebene und/oder einer weiteren Richtung verstanden werden, die bevorzugt von einer parallelen Ausrichtung der Ebene und/oder der Richtung relativ zu der weiteren Ebene und/oder der weiteren Richtung abweicht. Es ist jedoch auch denkbar, dass die Schneidebene bei einer Bearbeitung eines Werkstücks zumindest im Wesentlichen parallel zu einer bearbeitenden Werkstückoberfläche ausgerichtet ist, insbesondere bei einer Ausbildung des Schneidstrangs als Schleifmittel usw. Unter "zumindest im Wesentlichen parallel" soll hier insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist. Ferner soll hier unter "zumindest im Wesentlichen senkrecht" insbesondere eine Ausrichtung einer Richtung relativ zu einer Bezugsrichtung definieren, wobei die Richtung und die Bezugsrichtung, insbesondere in einer Ebene betrachtet, einen Winkel von 90° einschließen und der Winkel eine maximale Abweichung von insbesondere kleiner als 8°, vorteilhaft kleiner als 5° und besonders vorteilhaft kleiner als 2° aufweist. Unter einer "Schneidrichtung" soll hier insbesondere eine Richtung verstanden werden, entlang der der Schneidstrang zur Erzeugung eines Schneidspalts und/oder zur Abtrennung und/oder zur Abtragung von Werkstoffteilchen eines zu bearbeitenden Werkstücks in zumindest einem Betriebszustand infolge einer Antriebskraft und/oder eines Antriebsmoments, insbesondere in der Führungseinheit, bewegt wird. Bevorzugt wird der Schneidstrang in einem Betriebszustand entlang der Schneidrichtung relativ zur Führungseinheit bewegt. Mittels der erfindungsgemäßen Ausgestaltung der Werkzeugmaschinentrennvorrichtung können besonders vorteilhaft Schneidspalte mit geringen Abmessungen erzeugt werden. Ferner kann vorteilhaft mittels der geringen Abmessung des erzeugten Schneidspalts ein hoher Verschnitt bei einem Zerteilen von Werkstücken vermieden werden.

Besonders vorteilhaft können Schneidspalte mit geringen Abmessungen erzeugt werden, indem der Schneidstrang, entlang der zumindest im Wesentlichen senkrecht zur Schneidebene des Schneidstrangs verlaufenden Richtung betrachtet, eine maximale Abmessung zwischen 1,3 mm bis 2,2 mm aufweist. Somit ist der Schneidstrang bevorzugt dazu vorgesehen, einen Schneidspalt zu erzeugen, der, entlang der zumindest im Wesentlichen senkrecht zur Schneidebene des Schneidstrangs verlaufenden Richtung betrachtet, eine maximal Abmessung zwischen 1,3 mm bis 2,2 mm aufweist. Es ist jedoch auch denkbar, dass der Schneidstrang, entlang der zumindest im Wesentlichen senkrecht zur Schneidebene des Schneidstrangs verlaufenden Richtung betrachtet, eine maximale Abmessung aufweist, die kleiner als 1,3 mm ist.

Des Weiteren wird vorgeschlagen, dass die Führungseinheit zusammen mit dem montierten Schneidstrang, entlang einer zumindest im Wesentlichen parallel zur Schneidebene des Schneidstrangs und zumindest im Wesentlichen senkrecht zu einer Haupterstreckungsrichtung der Führungseinheit verlaufenden Richtung betrachtet, eine maximale Abmessung kleiner als 50 mm aufweist. Bevorzugt weist die Führungseinheit zusammen mit dem montierten Schneidstrang, entlang der zumindest im Wesentlichen parallel zur Schneidebene des Schneidstrangs und zumindest im Wesentlichen senkrecht zur Haupterstreckungsrichtung der Führungseinheit verlaufenden Richtung betrachtet, eine Abmessung kleiner als 30 mm auf, besonders bevorzugt kleiner als 25 mm. Die Abmessung ist bevorzugt als Gesamthöhe der Führungseinheit zusammen mit dem an der Führungseinheit montierten Schneidstrang ausgebildet. Besonders bevorzugt weist die Werkzeugmaschinentrennvorrichtung eine Gesamthöhe entlang einer Gesamterstreckung der Werkzeugmaschinentrennvorrichtung mit einem Wert aus einem Wertebereich von 5 mm bis 40 mm auf. Somit ist der Schneidstrang vorzugsweise dazu vorgesehen, einen Schneidspalt zu erzeugen, der, entlang einer zumindest im Wesentlichen parallel zur Schneidebene des Schneidstrangs und zumindest im Wesentlichen senkrecht zur Haupterstreckungsrichtung des Schneidstrangs verlaufenden Richtung betrachtet, eine maximale Abmessung kleiner als 50 mm aufweist. Bevorzugt ist der Schneidstrang dazu vorgesehen, einen Schneidspalt zu erzeugen, der, entlang der zumindest im Wesentlichen parallel zur Schneidebene des Schneidstrangs und zumindest im Wesentlichen senkrecht zur Haupterstreckungsrichtung der Führungseinheit zusammen mit dem montierten Schneidstrang verlaufenden Richtung betrachtet, eine Abmessung zwischen 10 mm bis 30 mm und besonders bevorzugt eine Abmessung zwischen 11 bis 25 mm aufweist. Unter einer "Haupterstreckungsrichtung" soll hier insbesondere eine Richtung verstanden werden, entlang der die Führungseinheit zusammen mit dem montierten Schneidstrang eine maximale Erstreckung aufweist. Besonders bevorzugt verläuft die Haupterstreckungsrichtung zumindest im Wesentlichen parallel zu den Geraden der Außenkontur der Führungseinheit. Ein Leistungsbedarf einer Werkzeugmaschine zum Antrieb der erfindungsgemäßen Werkzeugmaschinentrennvorrichtung ist insbesondere abhängig von einem mittels der erfindungsgemäßen Werkzeugmaschinentrennvorrichtung erzeugbaren Schneidspalt. Somit kann vorteilhaft eine Werkzeugmaschine mit einer geringen Leistungsanforderung zum Antrieb der erfindungsgemäßen Werkzeugmaschinentrennvorrichtung genutzt werden.

Ferner wird vorgeschlagen, dass der Schneidstrang zumindest ein Schneidelement aufweist, das sich in einem montierten Zustand zumindest entlang einer zumindest im Wesentlichen senkrecht zur Schneidebene des Schneidstrangs verlaufenden Richtung weniger als 0,2 mm über zumindest eine Außenfläche der Führungseinheit hinaus erstreckt. Unter einer "Außenfläche" soll hier insbesondere eine Fläche verstanden werden, die die Führungseinheit räumlich begrenzt. Bevorzugt verläuft die Außenfläche zumindest im Wesentlichen parallel zur Schneidebene des Schneidstrangs. Es kann vorteilhaft eine kompakte Werkzeugmaschinentrennvorrichtung erreicht werden.

Vorteilhafterweise schließt das Schneidelement in einem montierten Zustand entlang der zumindest im Wesentlichen senkrecht zur Schneidebene des Schneidstrangs verlaufenden Richtung zumindest im Wesentlichen bündig mit zumindest einer Außenfläche der Führungseinheit ab. Unter "zumindest im Wesentlichen bündig abschließen" soll hier insbesondere eine Anordnung des Schneidelements, insbesondere in einem montierten Zustand in und/oder an der Führungseinheit, relativ zur Führungseinheit verstanden werden, bei der das Schneidelement, entlang einer zumindest im Wesentlichen senkrecht zur Schneidebene verlaufenden Richtung betrachtet, eine Abmessung aufweist, die sich maximal bis zu einer Außenfläche der Führungseinheit erstreckt und sich insbesondere innerhalb einer Abmessung der Führungseinheit, entlang einer zumindest im Wesentlichen senkrecht zur Schneidebene verlaufenden Richtung betrachtet, erstreckt. Es kann vorteilhaft ein Schneidspalt während eines Aufliegens der Außenfläche der Führungseinheit auf einem Untergrund in einem quer zum Untergrund ausgerichteten Werkstück erzeugt werden.

Vorzugsweise weist der Schneidstrang zumindest drei Schneidenträgerelemente auf, die mittels zumindest zwei Verbindungselementen des Schneidstrangs gelenkig miteinander verbunden sind, die entlang einer Schneidrichtung des Schneidstrangs einen relativen Abstand zueinander aufweisen, der kleiner ist als 5 mm, bezogen auf Mittelachsen der Verbindungselemente. Bevorzugt weisen die Verbindungselemente entlang der Schneidrichtung des Schneidstrangs einen relativen Abstand zueinander auf, der kleiner als 4 mm ist und besonders bevorzugt kleiner als 3 mm ist. Unter einem "Schneidenträgerelement" soll hier insbesondere ein Element verstanden werden, an dem zumindest ein Schneidelement zum Abtrennen und/oder zum Abtragen von Werkstoffteilchen eines zu bearbeitenden Werkstücks fixiert ist. Der Begriff "Verbindungselement" soll hier insbesondere ein Element definieren, das dazu vorgesehen ist, zumindest zwei Bauteile formschlüssig und/oder kraftschlüssig miteinander zu verbinden, insbesondere beweglich miteinander zu verbinden, um eine Antriebskraft und/oder ein Antriebsmoment zu übertragen. Erfindungsgemäß ist das Verbindungselement bolzenförmig ausgebildet. Das Verbindungselement ist auch einstückig mit einem Schneidenträgerelement ausgebildet. Unter "einstückig" soll hier insbesondere zumindest stoffschlüssig verbunden verstanden werden, beispielsweise durch einen Schweißprozess, einen Klebeprozess, einen Anspritzprozess und/oder einen anderen, einem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling. Es kann vorteilhaft eine kompakte Anordnung von Schneidenträgerelementen relativ zueinander erreicht werden.

Zudem wird vorgeschlagen, dass die Werkzeugmaschinentrennvorrichtung eine Gesamtmasse aufweist, die kleiner ist als 500 g. Bevorzugt weist die Werkzeugmaschinentrennvorrichtung eine Gesamtmasse auf, die kleiner ist als 100 g und besonders bevorzugt kleiner ist als 50 g. Es kann vorteilhaft eine leichte Werkzeugmaschinentrennvorrichtung erreicht werden, die komfortabel von einem Bediener handhabbar ist.

Ferner geht die Erfindung aus von einer tragbaren Werkzeugmaschine mit einer Kopplungsvorrichtung zur formschlüssigen und/oder kraftschlüssigen Kopplung mit einer erfindungsgemäßen Werkzeugmaschinentrennvorrichtung. Unter einer "tragbaren Werkzeugmaschine" soll hier insbesondere eine Werkzeugmaschine, insbesondere eine Handwerkzeugmaschine, verstanden werden, die von einem Bediener transportmaschinenlos transportiert werden kann. Die tragbare Werkzeugmaschine weist insbesondere eine Masse auf, die kleiner ist als 40 kg, bevorzugt kleiner als 10 kg und besonders bevorzugt kleiner als 5 kg. Besonders bevorzugt bilden die erfindungsgemäße Werkzeugmaschinentrennvorrichtung und die erfindungsgemäße tragbare Werkzeugmaschine ein Werkzeugmaschinensystem. Es kann vorteilhaft eine tragbare Werkzeugmaschine erreicht werden, die bei einer Vielzahl von Anwendungsfällen zur Bearbeitung von Werkstücken eingesetzt werden kann.

Des Weiteren wird vorgeschlagen, dass die tragbare Werkzeugmaschine zumindest eine Antriebseinheit umfasst, die dazu vorgesehen ist, den Schneidstrang in zumindest einem Betriebszustand mit einer Schnittgeschwindigkeit kleiner als 6 m/s anzutreiben, insbesondere entlang der Schneidrichtung des Schneidstrangs. Bevorzugt ist die Antriebseinheit dazu vorgesehen, den Schneidstrang mit einer Schnittgeschwindigkeit kleiner 5 m/s und besonders bevorzugt mit einer Schnittgeschwindigkeit kleiner 4 m/s anzutreiben. Mittels einer geringen Schnittgeschwindigkeit kann vorteilhaft eine Standzeit des Schneidstrangs positiv beeinflusst werden.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine erfindungsgemäße tragbare Werkzeugmaschine mit einer erfindungsgemäßen Werkzeugmaschinentrennvorrichtung in einer schematischen Darstellung,
- Fig. 2: eine Detailansicht der erfindungsgemäßen Werkzeugmaschinentrennvorrichtung in einer schematischen Darstellung,
- Fig. 3: eine Detailansicht von Schneidenträgerelementen der erfindungsgemäßen Werkzeugmaschinentrennvorrichtung in einer schematischen Darstellung und
- Fig. 4: eine Detailansicht einer Anordnung der Schneidenträgerelemente in einer Führungseinheit der erfindungsgemäßen Werkzeugmaschinentrennvorrichtung in einer schematischen Darstellung.

### Beschreibung des Ausführungsbeispiels

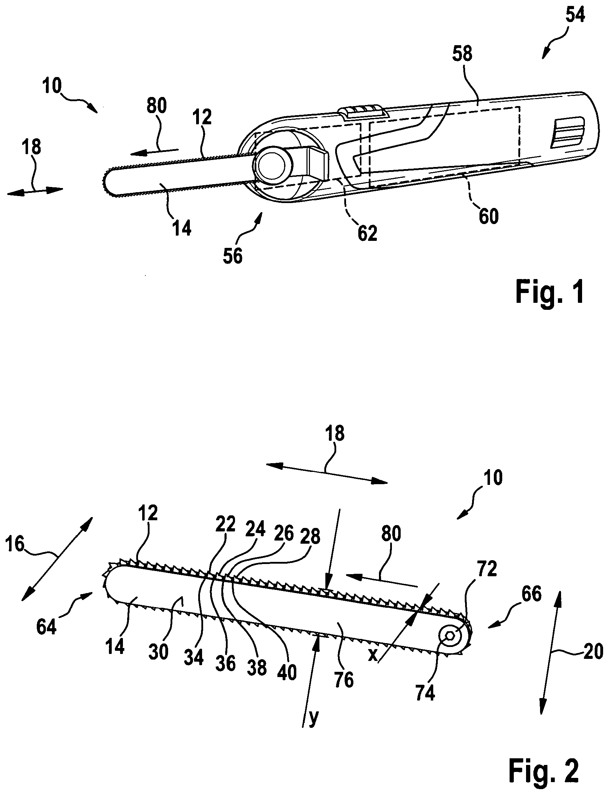

Figur 1 zeigt eine tragbare Werkzeugmaschine 54 mit einer Werkzeugmaschinentrennvorrichtung 10, die zusammen ein Werkzeugmaschinensystem bilden. Die tragbare Werkzeugmaschine 54 weist eine Kopplungsvorrichtung 56 zur formschlüssigen und/oder kraftschlüssigen Kopplung mit der Werkzeugmaschinentrennvorrichtung 10 auf. Die Kopplungsvorrichtung 56 kann hierbei als Bajonettverschluss und/oder als andere, einem Fachmann als sinnvoll erscheinende Kopplungsvorrichtung ausgebildet sein. Ferner weist die tragbare Werkzeugmaschine 54 ein Werkzeugmaschinengehäuse 58 auf, das eine Antriebseinheit 60 und eine Getriebeeinheit 62 der tragbaren Werkzeugmaschine 54 umschließt. Die Antriebseinheit 60 und die Getriebeeinheit 62 sind zur Erzeugung eines auf die Werkzeugmaschinentrennvorrichtung 10 übertragbaren Antriebsmoments auf eine, einem Fachmann bereits bekannte Art und Weise wirkungsmäßig miteinander verbunden. Die Getriebeeinheit 62 ist als Winkelgetriebe ausgebildet. Die Antriebseinheit 60 ist als Elektromotoreinheit ausgebildet. Es ist jedoch auch denkbar, dass die Antriebseinheit 60 und/oder die Getriebeeinheit 62 eine andere, einem Fachmann als sinnvoll erscheinende Ausgestaltung aufweisen. Die Antriebseinheit 60 ist dazu vorgesehen, einen Schneidstrang 12 der Werkzeugmaschinentrennvorrichtung 10 in zumindest einem Betriebszustand mit einer Schnittgeschwindigkeit kleiner als 6 m/s anzutreiben. Hierbei weist die tragbare Werkzeugmaschine 54 zumindest einen Betriebsmodus auf, in dem ein Antrieb des Schneidstrangs 12 in einer Führungseinheit 14 der Werkzeugmaschinentrennvorrichtung 10 entlang einer Schneidrichtung 80 des Schneidstrangs 12 mit einer Schnittgeschwindigkeit kleiner als 6 m/s ermöglicht wird.

Figur 2 zeigt die Werkzeugmaschinentrennvorrichtung 10 in einem von der Kopplungsvorrichtung 56 der tragbaren Werkzeugmaschine 54 entkoppelten Zustand. Die Werkzeugmaschinentrennvorrichtung 10 weist den Schneidstrang 12 und die Führungseinheit 14 auf. Der Schneidstrang 12 und die Führungseinheit bilden zusammen ein geschlossenes System. Die Führungseinheit 14 ist hierbei als Schwert ausgebildet. Ein Drehmomentübertragungselement 72 der Werkzeugmaschinentrennvorrichtung 10 zum Antrieb des Schneidstrangs 12 ist in der Führungseinheit 14 gelagert. Hierbei ist das Drehmomentübertragungselement 72, entlang einer Richtung senkrecht zu einer Schneidebene des Schneidstrangs 12 betrachtet, teilweise zwischen zwei Außenwänden 76, 78 der Führungseinheit 14 angeordnet (in Figur 2 lediglich eine der zwei Außenwände 76, 78 erkennbar). Das Drehmomentübertragungselement 72 ist zur Übertragung von Kräften und/oder von Drehmomenten auf den Schneidstrang 12 mittels der Kopplungsvorrichtung 56 mit der Getriebeeinheit 62 und/oder der Antriebseinheit 60 verbindbar. Hierzu weist das Drehmomentübertragungselement 72 eine Ausnehmung 74 auf, in die ein Ritzel der Antriebseinheit 60 und/oder ein Zahnrad und/oder eine verzahnte Welle der Getriebeeinheit 62 in einem montierten Zustand eingreift. Die Ausnehmung 74 ist konzentrisch im Drehmomentübertragungselement 72 angeordnet. Ferner ist das Drehmomentübertragungselement 72 als Zahnrad ausgebildet. Das Zahnrad weist einen Durchmesser auf, der kleiner ist als 8 mm. In einer alternativen hier nicht dargestellten Ausgestaltung weist das Drehmomentübertragungselement 72 einen Durchmesser auf, der kleiner ist als 15 mm.

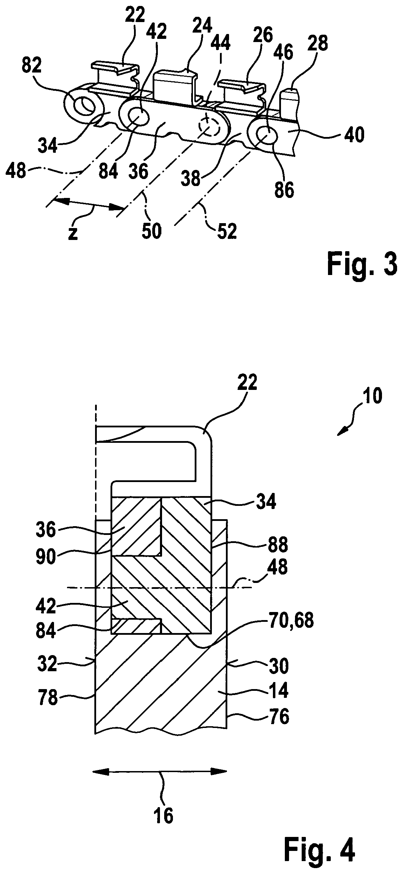

Ferner weist die Führungseinheit 14, in der Schneidebene des Schneidstrangs 12 betrachtet, zumindest zwei konvex ausgebildete Enden 64, 66 auf. Die konvex ausgebildeten Enden 64, 66 der Führungseinheit 14 sind an zwei sich abgewandten Seiten der Führungseinheit 14 angeordnet. Der Schneidstrang 12 wird mittels der Führungseinheit 14 geführt. Hierzu weist die Führungseinheit 14 zumindest ein Führungselement 68 auf (Figur 4) mittels dessen der Schneidstrang 12 geführt wird. Das Führungselement 68 ist als Führungsnut 70 (Figur 4) ausgebildet, die sich in einer Schneidebene des Schneidstrangs 12 entlang eines gesamten Umfangs der Führungseinheit 14 erstreckt. Hierbei wird der Schneidstrang 12 mittels die Führungsnut 70 begrenzende Randbereiche der Führungseinheit 14 geführt. Es ist jedoch auch denkbar, dass das Führungselement 68 in einer anderen, einem Fachmann als sinnvoll erscheinenden Art und Weise, wie beispielsweise als rippenartige Anformung an der Führungseinheit 14, die in eine Ausnehmung an dem Schneidstrang 12 eingreift, ausgebildet ist. Der Schneidstrang 12 wird, in einer senkrecht zur Schneidebene verlaufenden Ebene betrachtet, von drei Seiten von den die Führungsnut 70 begrenzenden Randbereiche umgeben. Der Schneidstrang 12 wird während eines Betriebs umlaufend entlang des Umfangs in der Führungsnut 70 relativ zur Führungseinheit 14 bewegt.

Der Schneidstrang 12 weist, entlang einer zumindest im Wesentlichen senkrecht zur Schneidebene des Schneidstrangs 12 verlaufenden Richtung 16 betrachtet, entlang einer Gesamtlänge des Schneidstrangs eine maximale Abmessung x von 1,3 mm auf. Somit weist die Werkzeugmaschinentrennvorrichtung 10 eine Gesamtbreite von 1,3 mm auf. In einer alternativen hier nicht näher dargestellten Ausgestaltung der Werkzeugmaschinentrennvorrichtung 10 weist der Schneidstrang 12, entlang der zumindest im Wesentlichen senkrecht zur Schneidebene des Schneidstrangs 12 verlaufenden Richtung 16 betrachtet, entlang einer Gesamtlänge des Schneidstrangs eine maximale Abmessung x von 2,2 mm auf. Somit weist die Werkzeugmaschinentrennvorrichtung 10 in der alternativen Ausgestaltung eine Gesamtbreite von 2,2 mm auf. Es ist jedoch auch denkbar, dass der Schneidstrang 12, entlang der zumindest im Wesentlichen senkrecht zur Schneidebene des Schneidstrangs 12 verlaufenden Richtung 16 betrachtet, eine von 1,3 mm und/oder von 2,2 mm abweichende Abmessung aufweist, die einen Wert zwischen 1 mm und 3 mm aufweist.

Des Weiteren weisen die Führungseinheit 14 zusammen mit dem montierten Schneidstrang 12, entlang einer zumindest im Wesentlichen parallel zur Schneidebene des Schneidstrangs 12 und zumindest im Wesentlichen senkrecht zu einer Haupterstreckungsrichtung 18 der Führungseinheit 14 zusammen mit dem montierten Schneidstrang 12 verlaufenden Richtung 20 betrachtet, entlang einer Gesamterstreckung der Führungseinheit 14 zusammen mit dem montierten Schneidstrang 12 eine Abmessung y auf, die kleiner ist als 15 mm. Somit weist die Werkzeugmaschinentrennvorrichtung 10 entlang einer Gesamterstreckung der Werkzeugmaschinentrennvorrichtung 10 eine maximale Gesamthöhe auf, die kleiner ist als 15 mm. In einer alternativen hier nicht näher dargestellten Ausgestaltung der Werkzeugmaschinentrennvorrichtung 10 weist die Führungseinheit 14 zusammen mit dem montierten Schneidstrang 12, entlang der zumindest im Wesentlichen parallel zur Schneidebene des Schneidstrangs 12 und zumindest im Wesentlichen senkrecht zur Haupterstreckungsrichtung 18 der Führungseinheit 14 zusammen mit dem montierten Schneidstrang 12 verlaufenden Richtung 20 betrachtet, entlang einer Gesamterstreckung der Führungseinheit 14 zusammen mit dem montierten Schneidstrang 12 eine maximale Abmessung y auf, die kleiner ist als 25 mm. Somit weist die Werkzeugmaschinentrennvorrichtung 10 in der alternativen Ausgestaltung entlang einer Gesamterstreckung der Werkzeugmaschinentrennvorrichtung 10 eine maximale Gesamthöhe auf, die kleiner ist als 25 mm auf. Es ist jedoch auch denkbar, dass die Führungseinheit 14 zusammen mit dem montierten Schneidstrang 12, entlang der zumindest im Wesentlichen parallel zur Schneidebene des Schneidstrangs 12 und zumindest im Wesentlichen senkrecht zur Haupterstreckungsrichtung 18 der Führungseinheit 14 zusammen mit dem montierten Schneidstrang 12 verlaufenden Richtung 20 betrachtet, eine von 15 mm und/oder von 25 mm abweichende Abmessung y aufweisen, die einen Wert zwischen 5 mm und 40 mm aufweist.

Ferner weist die Werkzeugmaschinentrennvorrichtung 10 eine Gesamtlänge, entlang der Haupterstreckungsrichtung 18 betrachtet, auf, die kleiner ist als 220 mm. Die Gesamtlänge der Werkzeugmaschinentrennvorrichtung 10 wird durch eine Erstreckung der Führungseinheit 14 und dem an der Führungseinheit 14 montierten Schneidstrang 12 entlang der Haupterstreckungsrichtung 18 gebildet. Ferner weist die Werkzeugmaschinentrennvorrichtung 10 eine Gesamtmasse auf, die kleiner ist als 500 g. Die Gesamtmasse der Werkzeugmaschinentrennvorrichtung 10 setzt sich zusammen aus einer Einzelmasse der Führungseinheit 14, einer Einzelmasse des an der Führungseinheit 14 montierten Schneidstrangs 12 und einer Einzelmasse des in der Führungseinheit 14 gelagerten Drehmomentübertragungselements 72.

Figur 3 zeigt eine Detailansicht von Schneidenträgerelementen 34, 36, 38, 40 des Schneidstrangs 12 der Werkzeugmaschinentrennvorrichtung 10. Der Schneidstrang 12 weist zumindest drei Schneidenträgerelemente 34, 36, 38, 40 auf, die mittels zumindest zwei Verbindungselementen 42, 44, 46 des Schneidstrangs 12 gelenkig miteinander verbunden sind. Die Verbindungselemente 42, 44, 46 weisen entlang einer Schneidrichtung 80 des Schneidstrangs 12 einen relativen Abstand z zueinander auf, der kleiner ist als 5 mm, bezogen auf Mittelachsen 48, 50, 52 der Verbindungselemente 42, 44, 46. Die Verbindungselemente 42, 44, 46 sind bolzenförmig ausgebildet. Es ist jedoch auch denkbar, dass die Verbindungselemente 42, 44, 46 eine andere, einem Fachmann als sinnvoll erscheinende Ausgestaltung aufweisen. Ferner sind die Verbindungselemente 42, 44, 46 jeweils einstückig mit einem der Schneidenträgerelemente 34, 36, 38, 40 ausgebildet. Es ist jedoch auch denkbar, dass die Verbindungselemente 42, 44, 46 getrennt von den Schneidenträgerelementen 34, 36, 38, 40 ausgebildet sind. Erfindungsgemäß weist der Schneidstrang 12 eine Vielzahl an Schneidenträgerelementen 34, 36, 38, 40 auf, die jeweils mittels eines der Verbindungselemente 42, 44, 46 miteinander verbunden sind. Ein Fachmann wird je nach Anwendungsfall eine für den Schneidstrang 12 geeignete Anzahl an Schneidenträgerelementen 34, 36, 38, 40 auswählen. Ferner weisen die Schneidenträgerelemente 34, 36, 38, 40 jeweils eine Verbindungsausnehmung 82, 84, 86 zur Aufnahme jeweils eines der Verbindungselemente 42, 44, 46 in einem montierten Zustand auf. Die Verbindungselemente 42, 44, 46 sind mittels der Führungseinheit 14 geführt (Figur 4). Hierbei sind die Verbindungselemente 42, 44, 46 in einem montierten Zustand des Schneidstrangs 12 in der Führungsnut 70 angeordnet. Die Verbindungselemente 42, 44, 46 können sich, in einer senkrecht zur Schneidebene verlaufenden Ebene betrachtet, an zwei Seitenwänden 88, 90 der Führungsnut 70 abstützen. Die Seitenwände 88, 90 der Führungsnut 70 erstrecken sich, in der Schneidebene betrachtet, ausgehend von der Führungseinheit 14 senkrecht zur Schneidrichtung 80 des Schneidstrangs 12 nach außen.

Figur 4 zeigt eine Detailansicht einer Anordnung der Schneidenträgerelemente 34, 36, 38, 40 in der Führungsnut 70 der Führungseinheit 14 der Werkzeugmaschinentrennvorrichtung 10. Der Schneidstrang 12 weist Schneidelemente 22, 24, 26, 28 auf, die sich jeweils in einem montierten Zustand entlang der zumindest im Wesentlichen senkrecht zur Schneidebene des Schneidstrangs 12 verlaufenden Richtung 16 weniger als 0,2 mm über eine Außenfläche 30, 32 der Führungseinheit 14 hinaus erstrecken. Die Schneidelemente 22, 24, 26, 28 schließen jeweils in einem montierten Zustand entlang der zumindest im Wesentlichen senkrecht zur Schneidebene des Schneidstrangs 12 verlaufenden Richtung 16 zumindest im Wesentlichen bündig mit einer der Außenflächen 30, 32 der Führungseinheit 14 ab. In einer alternativen hier nicht dargestellten Ausgestaltung der Werkzeugmaschinentrennvorrichtung 10 schließen die Schneidelemente 22, 24, 26, 28 jeweils in einem montierten Zustand entlang der zumindest im Wesentlichen senkrecht zur Schneidebene des Schneidstrangs 12 verlaufenden Richtung 16 zumindest im Wesentlichen bündig mit einer der Außenflächen 30, 32 der Führungseinheit 14 ab und über eine der Außenflächen 30, 32 erstrecken sich die Schneidelemente 22, 24, 26, 28 jeweils in einem montierten Zustand entlang der zumindest im Wesentlichen senkrecht zur Schneidebene des Schneidstrangs 12 verlaufenden Richtung 16 weniger als 0,2 mm hinaus.

Eine Anzahl der Schneidelemente 22, 24, 26, 28 ist abhängig von einer Anzahl an Schneidenträgerelementen 34, 36, 38, 40. Ein Fachmann wird je nach Anzahl an Schneidenträgerelementen 34, 36, 38, 40 eine geeignete Anzahl an Schneidelementen 22, 24, 26, 28 auswählen. Die Schneidelemente 22, 24, 26, 28 sind jeweils einstückig mit einem der Schneidenträgerelemente 34, 36, 38, 40 ausgebildet. Ferner sind die Schneidelemente 22, 24, 26, 28 dazu vorgesehen, ein Abtrennen und/oder ein Abtragen von Werkstoffteilchen eines zu bearbeitenden Werkstücks (hier nicht näher dargestellt) zu ermöglichen. Die Schneidelemente 22, 24, 26, 28 können beispielsweise als Vollmeißel, Halbmeißel oder andere, einem Fachmann als sinnvoll erscheinende Schneidenarten ausgebildet sein, die dazu vorgesehen sind, ein Abtrennen und/oder ein Abtragen von Werkstoffteilchen eines zu bearbeitenden Werkstücks zu ermöglichen. Der Schneidstrang 12 ist endlos ausgebildet. Somit ist der Schneidstrang 12 als Schneidkette ausgebildet. Die Schneidenträgerelemente 34, 36, 38, 40 sind hierbei als Kettenglieder ausgebildet, die mittels der bolzenförmigen Verbindungselemente 42, 44, 46 miteinander verbunden sind. Es ist jedoch auch denkbar, dass der Schneidstrang 12 , die Schneidenträgerelemente 34, 36, 38, 40 und/oder die Verbindungselemente 42, 44, 46 in einer anderen, einem Fachmann als sinnvoll erscheinenden Art und Weise ausgestaltet sind.

## Patentansprüche

1. Werkzeugmaschinentrennvorrichtung, insbesondere Handwerkzeugmaschinentrennvorrichtung, mit zumindest einem Schneidstrang (12) und mit zumindest einer Führungseinheit (14), wobei der Schneidstrang (12), entlang einer zumindest im Wesentlichen senkrecht zu einer Schneidebene des Schneidstrangs (12) verlaufenden Richtung (16) betrachtet, eine maximale Abmessung (x) kleiner als 4 mm aufweist, **dadurch gekennzeichnet, dass** der Schneidstrang (12) eine Vielzahl an Schneidenträgerelementen (34, 36, 38, 40) aufweist, die mittels eines der Verbindungselemente (42, 44, 46) miteinander verbunden sind, wobei das Verbindungselement bolzenförmig und einstückig mit einem Schneidenträgerelement ausgebildet ist, wobei das Verbindungselement (42, 44, 46) entlang der Mittelachse (48, 50, 52) des bolzenförmigen Verbindungselements (42, 44, 46) absteht.

2. Werkzeugmaschinentrennvorrichtung nach Anspruch 1,
**dadurch gekennzeichnet, dass** der Schneidstrang (12), entlang der zumindest im Wesentlichen senkrecht zur Schneidebene des Schneidstrangs (12) verlaufenden Richtung (16) betrachtet, eine maximale Abmessung (x) zwischen 1,3 mm bis 2,2 mm aufweist.

3. Werkzeugmaschinentrennvorrichtung nach einem der vorhergehenden Ansprüche,
**dadurch gekennzeichnet, dass** die Führungseinheit (14) zusammen mit dem montierten Schneidstrang (12), entlang einer zumindest im Wesentlichen parallel zur Schneidebene des Schneidstrangs (12) und zumindest im Wesentlichen senkrecht zu einer Haupterstreckungsrichtung (18) der Führungseinheit (14) verlaufenden Richtung (20) betrachtet, eine maximale Abmessung (y) kleiner als 50 mm aufweist.

4. Werkzeugmaschinentrennvorrichtung nach einem der vorhergehenden Ansprüche,
**dadurch gekennzeichnet, dass** der Schneidstrang (12) zumindest ein Schneidelement (22, 24, 26, 28) aufweist, das sich in einem montierten Zustand zumindest entlang der zumindest im Wesentlichen senkrecht zur Schneidebene des Schneidstrangs (12) verlaufenden Richtung (16) weniger als 0,2 mm über zumindest eine Außenfläche (30, 32) der Führungseinheit (14) hinaus erstreckt.

5. Werkzeugmaschinentrennvorrichtung nach Anspruch 4,
**dadurch gekennzeichnet, dass** das Schneidelement (22, 24, 26, 28) in einem montierten Zustand entlang der zumindest im Wesentlichen senkrecht zur Schneidebene des Schneidstrangs (12) verlaufenden Richtung (16) zumindest im Wesentlichen bündig mit zumindest einer Außenfläche (30, 32) der Führungseinheit (14) abschließt.

6. Werkzeugmaschinentrennvorrichtung nach einem der vorhergehenden Ansprüche,
**dadurch gekennzeichnet, dass** der Schneidstrang (12) zumindest drei Schneidenträgerelemente (34, 36, 38, 40) aufweist, die mittels zumindest zwei Verbindungselementen (42, 44, 46) des Schneidstrangs (12) gelenkig miteinander verbunden sind, die entlang einer Schneidrichtung (80) des Schneidstrangs (12) einen relativen Abstand (z) zueinander aufweisen, der kleiner ist als 5 mm, bezogen auf Mittelachsen (48, 50, 52) der Verbindungselemente (42, 44, 46).

7. Werkzeugmaschinentrennvorrichtung nach einem der vorhergehenden Ansprüche,
**gekennzeichnet durch** eine Gesamtmasse, die kleiner ist als 500 g.

8. Tragbare Werkzeugmaschine mit einer Kopplungsvorrichtung (56) zur formschlüssigen und/oder kraftschlüssigen Kopplung mit einer Werkzeugmaschinentrennvorrichtung nach einem der vorhergehenden Ansprüche.

9. Tragbare Werkzeugmaschine nach Anspruch 8,
**gekennzeichnet durch** zumindest eine Antriebseinheit (60), die dazu vorgesehen ist, den Schneidstrang (12) in zumindest einem Betriebszustand mit einer Schnittgeschwindigkeit kleiner als 6 m/s anzutreiben.

10. Werkzeugmaschinensystem mit zumindest einer Werkzeugmaschinentrennvorrichtung nach einem der Ansprüche 1 bis 7 und mit einer tragbaren Werkzeugmaschine nach einem der Ansprüche 8 und 9.

## Claims

1. Machine tool separating device, in particular manual machine tool separating device, having at least one cutting strand (12) and having at least one guide unit (14), wherein the cutting strand (12), as seen along a direction (16) running at least substantially perpendicular to a cutting plane of the cutting strand (12), has a maximum dimension (x) smaller than 4 mm,
**characterized in that** the cutting strand (12) has a multiplicity of blade carrier elements (34, 36, 38, 40) which are connected to one another by means of one of the connecting elements (42, 44, 46), wherein the connecting element is formed in the shape of a bolt and in one piece with a blade carrier element, wherein the connecting element (42, 44, 46) protrudes along the central axis (48, 50, 52) of the bolt-shaped connecting element (42, 44, 46).

2. Machine tool separating device according to Claim 1,
**characterized in that** the cutting strand (12), as seen along the direction (16) running at least substantially perpendicular to the cutting plane of the cutting strand (12), has a maximum dimension (x) of between 1.3 mm and 2.2 mm.

3. Machine tool separating device according to one of the preceding claims,
**characterized in that** the guide unit (14) together with the mounted cutting strand (12), as seen along a direction (20) running at least substantially parallel to the cutting plane of the cutting strand (12) and at least substantially perpendicular to a main extension direction (18) of the guide unit (14), has a maximum dimension (y) which is smaller than 50 mm.

4. Machine tool separating device according to one of the preceding claims,
**characterized in that** the cutting strand (12) has at least one cutting element (22, 24, 26, 28) which, in a mounted state, extends less than 0.2 mm beyond at least one outer surface (30, 32) of the guide unit (14) at least along the direction (16) running at least substantially perpendicular to the cutting plane of the cutting strand (12).

5. Machine tool separating device according to Claim 4,
**characterized in that** the cutting element (22, 24, 26, 28) in a mounted state ends at least substantially flush with at least one outer surface (30, 32) of the guide unit (14) along the direction (16) running at least substantially perpendicular to the cutting plane of the cutting strand (12).

6. Machine tool separating device according to one of the preceding claims,
**characterized in that** the cutting strand (12) has at least three blade carrier elements (34, 36, 38, 40) which are connected to one another in an articulated manner by means of at least two connecting elements (42, 44, 46) of the cutting strand (12), which connecting elements have a relative distance (z) to one another, along a cutting direction (80) of the cutting strand (12), which is smaller than 5 mm with respect to central axes (48, 50, 52) of the connecting elements (42, 44, 46).

7. Machine tool separating device according to one of the preceding claims,
**characterized by** a total mass which is less than 500 g.

8. Portable machine tool with a coupling device (56) for form-fitting and/or force-fitting coupling to a machine tool separating device according to one of the preceding claims.

9. Portable machine tool according to Claim 8,
**characterized by** at least one drive unit (60) which is provided in order to drive the cutting strand (12) in at least one operating state with a cutting speed of less than 6 m/s.

10. Machine tool system having at least one machine tool separating device according to one of Claims 1 to 7 and having a portable machine tool according to one of Claims 8 and 9.

## Revendications

1. Dispositif de séparation de machine-outil, en particulier dispositif de séparation de machine-outil à main, ledit dispositif comprenant au moins un ruban de coupe (12) et au moins une unité de guidage (14), le ruban de coupe (12), vu dans une direction (16) s'étendant au moins sensiblement perpendiculairement à un plan de coupe du ruban de coupe (12), ayant une dimension maximale (x) inférieure à 4 mm, **caractérisé en ce que** le ruban de coupe (12) comporte un grand nombre d'éléments porteurs de couteau (34, 36, 38, 40) qui sont reliés les uns aux autres au moyen de l'un des éléments de liaison (42, 44, 46), l'élément de liaison étant en forme de boulon et étant conçu d'une seule pièce avec un élément porteur de couteau, l'élément de liaison (42, 44, 46) faisant saillie le long de l'axe central (48, 50, 52) de l'élément de liaison (42, 44, 46) en forme de boulon.

2. Dispositif de séparation de machine-outil selon la revendication 1,
**caractérisé en ce que** le ruban de coupe (12), vu dans la direction (16) s'étendant au moins sensiblement perpendiculairement au plan de coupe du ruban de coupe (12), a une dimension maximale (x) comprise entre 1,3 mm et 2,2 mm.

3. Dispositif de séparation de machine-outil selon l'une des revendications précédentes,
**caractérisé en ce que** l'unité de guidage (14) conjointement avec le ruban de coupe (12) monté, vu dans une direction (20) s'étendant au moins sensiblement parallèlement au plan de coupe du ruban de coupe (12) et au moins sensiblement perpendiculairement à une direction d'extension principale (18) de l'unité de guidage (14), a une dimension maximale (y) inférieure à 50 mm.

4. Dispositif de séparation de machine-outil selon l'une des revendications précédentes,
**caractérisé en ce que** le ruban de coupe (12) comporte au moins un élément de coupe (22, 24, 26, 28) qui s'étend, dans un état monté, au moins dans la direction (16) s'étendant au moins sensiblement perpendiculairement au plan de coupe du ruban de coupe (12), à moins de 0,2 mm au-delà d'au moins une surface extérieure (30, 32) de l'unité de guidage (14).

5. Dispositif de séparation de machine-outil selon la revendication 4,
**caractérisé en ce que**, dans un état monté, par référence à la direction (16) s'étendant au moins sensiblement perpendiculairement au plan de coupe du ruban de coupe (12), l'élément de coupe (22, 24, 26, 28) se termine au moins sensiblement à fleur d'au moins un surface extérieure (30, 32) de l'unité de guidage (14) .

6. Dispositif de séparation de machine-outil selon l'une des revendications précédentes,
**caractérisé en ce que** le ruban de coupe (12) comporte au moins trois éléments porteurs de couteau (34, 36, 38, 40) qui sont reliés les uns aux autres de manière articulée au moyen d'au moins deux éléments de liaison (42, 44, 46) du ruban de coupe (12) qui, dans une direction de coupe (80) du ruban de coupe (12), sont à une distance relative (z) l'un de l'autre inférieure à 5 mm, par rapport à des axes centraux (48, 50, 52) des éléments de liaison (42, 44, 46).

7. Dispositif de séparation de machine-outil selon l'une des revendications précédentes,
**caractérisé par** une masse totale inférieure à 500 g.

8. Machine-outil portative comprenant un dispositif d'accouplement (56) destiné à être accouplé par complémentarité de formes et/ou en force à un dispositif de séparation de machine-outil selon l'une des revendications précédentes.

9. Machine-outil portative selon la revendication 8, **caractérisée par** au moins une unité d'entraînement (60) qui est prévue pour entraîner le ruban de coupe (12) dans au moins un état de fonctionnement à une vitesse de coupe inférieure à 6 m/s.

10. Système de machine-outil comprenant au moins un dispositif de séparation de machine-outil selon l'une des revendications 1 à 7 et une machine-outil portative selon l'une des revendications 8 et 9.
